(19) **Europäisches Patentamt / European Patent Office / Office européen des brevets**

(11) **EP 1 492 251 B1**

(12) **FASCICULE DE BREVET EUROPEEN**

(45) Date de publication et mention
de la délivrance du brevet:
**28.10.2009 Bulletin 2009/44**

(51) Int Cl.:
*H04W 48/02* *(2009.01)*    *H04W 52/50* *(2009.01)*
*H04W 4/22* *(2009.01)*    *H04W 52/28* *(2009.01)*
*H04W 52/48* *(2009.01)*

(21) Numéro de dépôt: **04014728.2**

(22) Date de dépôt: **11.06.2004**

(54) **Procédé de contrôle d'accès à des ressources d'un réseau de radiocommunication et station de base pour la mise en oeuvre du procédé**

Verfahren zur Steuerung von Zugriffen auf Ressourcen eines Kommunikationsnetzes und Basisstation zur Ausführung dieses Verfahrens

Resources access control method in a radiocommunication network and base station for implementing the procedure

(84) Etats contractants désignés:
**DE FR GB**

(30) Priorité: **24.06.2003 FR 0307609**

(43) Date de publication de la demande:
**29.12.2004 Bulletin 2004/53**

(73) Titulaire: **Alcatel Lucent**
**75008 Paris (FR)**

(72) Inventeurs:
• **Georgeaux, Eric**
**78180 Montigny le Bretonneux (FR)**
• **Fauconnier, Denis**
**78740 St. Remy les Chevreuses (FR)**

(74) Mandataire: **Ameline, Jean-Paul B.C. et al**
**Alcatel-Lucent**
**Intellectual Property & Standards**
**54, rue La Boétie**
**75008 Paris (FR)**

(56) Documents cités:
**EP-A- 1 119 118    WO-A-01/43296**
**WO-A-02/098017    GB-A- 2 355 887**

• **"3GPP TS 22.011 V3.7.0" 3GPP, [Online] mars 2002 (2002-03), pages 1-14, XP002273238 www. 3gpp.org Extrait de l'Internet: URL:http://www. 3gpp.org/ftp/Specs/html-inf o/22011.htm> [extrait le 2004-03-10]**

EP 1 492 251 B1

**Description**

La présente invention concerne les radiocommunications avec les mobiles, et plus particulièrement les méthodes de contrôle d'accès par des terminaux mobiles à des ressources d'un réseau de radiocommunication.

De nombreux systèmes de radiocommunication utilisent des méthodes de contrôle de puissance d'émission visant à réduire le niveau d'interférences entre les différentes communications. Ce contrôle de puissance présente une importance particulière dans les systèmes à étalement de spectre utilisant un accès multiple à répartition par codes (CDMA, «Code Division Multiplex Access»). Dans ces systèmes, plusieurs terminaux peuvent partager la même fréquence à chaque instant, la séparation des canaux sur l'interface radio résultant de la quasi-orthogonalité des codes d'étalement respectivement appliqués aux signaux émis sur ces canaux. En d'autres termes, pour un canal donné, les contributions des autres canaux sont vues comme du bruit.

En particulier, sur la voie montante, le contrôle de puissance d'émission limite la puissance d'émission des mobiles proches d'une station de base pour éviter que les signaux qu'ils émettent masquent les signaux issus de mobiles plus éloignés. En général, les méthodes de contrôle de puissance utilisent des boucles d'asservissement : la station de base fait des mesures sur le signal reçu d'un mobile (puissance, rapport signal-sur-interféreurs (C/I), ...), et transmet des commandes d'augmentation ou de réduction de puissance sur la voie descendante afin de tendre vers un objectif de qualité donné. Ces méthodes ne sont pas utilisables avant qu'un lien radio soit établi entre la station de base et le mobile. En particulier, elles ne permettent pas aux mobiles en veille de déterminer le niveau de puissance auquel ils doivent émettre leurs éventuelles requêtes d'accès aléatoire.

Dans le cas des systèmes UMTS (« Universal Mobile Télécommunications System »), les boucles d'asservissement de la puissance d'émission sur la voie montante sont décrites dans la spécification technique 3G TS 25.401, version 3.3.0, publiée en juin 2000 par le 3GPP (« 3rd Generation Partnership Project »), pages 20-21.

Pour la puissance des premiers signaux émis par un terminal mobile à destination d'une station de base, notamment en vue d'une nouvelle communication, ces boucles d'asservissement ne sont pas opérationnelles, car la station de base n'a pas reçu de signal préalable de la part du terminal mobile permettant de faire les mesures requises. Le terminal mobile estime alors la puissance de ces premiers signaux selon une autre procédure basée sur l'atténuation des signaux émis par la station de base et reçus par le terminal mobile. La station de base diffuse un signal de balise en indiquant la puissance à laquelle elle l'a émis. La réception de ces signaux de balise permet au mobile en veille de déterminer les ressources utilisées par la station de base avec laquelle la liaison est la meilleure (sélection de cellule) et d'évaluer l'atténuation du signal depuis cette station. Il en déduit une puissance initiale d'émission des signaux radio à destination de la station de base sélectionnée, d'autant plus élevée que l'atténuation est forte.

Dans certaines circonstances, notamment quand le terminal mobile se trouve très proche de l'antenne de réception de la station de base, le résultat de cette estimation peut être une puissance d'émission très faible. Une telle circonstance est par exemple un appel de la part d'un agent de maintenance intervenant sur la station de base elle-même et qui utilise son terminal radio.

Or un terminal radio, du fait de sa construction, présente une puissance minimale d'émission radio en dessous de laquelle il n'est pas capable d'émettre. La spécification technique 3G TS 25.101, version 3.6.0, publiée en mars 2001 par le 3GPP, préconise une puissance minimale d'émission par les terminaux mobiles UMTS de -50 dBm (section 6.4.3, page 13).

Dans le cas où la puissance d'émission estimée pour la requête d'accès aléatoire est inférieure à cette puissance minimale, le terminal mobile émet la requête d'accès aléatoire avec sa puissance minimale d'émission (voir spécification technique 3G TS 25.214, version 5.4.0, publiée par le 3GPP en mars 2003, section 6.1 ).

Si cette puissance d'émission est notablement supérieure à la puissance estimée à partir des mesures d'atténuation, cette émission risque d'engendrer un bruit conséquent pour les autres signaux radio reçus par la station de base, et donc de nuire à la qualité de transmission des communications en cours auxquelles appartiennent ces autres signaux.

Pour limiter cet effet, WO 99/65158 propose, lorsqu'un terminal mobile est trop proche d'une station de base, que cette station de base transmette une "première commande" audit terminal mobile, le faisant entrer dans un mode de fonctionnement dégradé, de manière à éviter que ce terminal ne cause du tort aux communications d'autres terminaux mobiles. Cette "première commande" peut notamment être générée après une requête d'accès et être transmise en lieu et place de l'allocation de canal. L'effet de cette commande peut être d'inhiber ou de retarder l'établissement d'une liaison entre le terminal mobile et la station de base considérés.

Cette solution inhibe la procédure d'établissement d'une communication. Cette inhibition est réalisée de façon systématique lorsque le terminal mobile est considéré comme trop proche de la station de base, sans considération du type de service envisagé.

En particulier, si le terminal mobile sollicite un service de communication spécifique tout en étant à proximité d'une station de base, par exemple s'il tente d'effectuer un appel d'urgence, cet appel risque d'être impossible du fait de son inhibition lors de la procédure d'établissement. Or, pour des raisons évidentes, il est souhaitable que certaines communications telles que les appels d'urgence puissent être effectuées en toutes circonstances.

Dans WO 02/098017, il est proposé d'inhiber l'émission des signaux d'accès au réseau par un terminal mobile lorsque l'écart entre sa puissance minimale d'émission et la puissance d'émission initiale estimée dépasse un seuil prédéfini, c'est-à-dire lorsque le terminal mobile est trop proche d'une station de base du réseau d'accès. Cette façon de faire permet de traiter facilement le problème des appels d'urgence puisque le terminal peut de lui-même passer outre à l'inhibition des signaux d'accès lorsqu'il sait qu'il est en train de demander un appel d'urgence. Mais comme cette solution n'est pas normalisée, elle ne sera en pratique appliquée que par une petite proportion du parc de terminaux en circulation. Or l'inhibition des requêtes d'accès au réseau depuis un terminal trop proche d'une station de base profite essentiellement aux autres terminaux situées dans la cellule, qui subissent moins d'interférences. Cette observation est de nature à freiner le recours à ce type de précaution, en dépit de son intérêt pour la collectivité des usagers du réseau.

Le document EP-A-1 119 118 décrit un procédé de traitement des requêtes d'accès aléatoires de terminaux mobiles, base sur la mesure du niveau de réception du préambule d'un signal d'accès aléatoire reçu par une station de base en vue de diminuer la probabilité de non détection de requête d'accès aléatoire.

Un but de la présente invention est de limiter ces inconvénients, en évitant notamment d'inhiber systématiquement toutes les tentatives d'appel sans distinction pour un terminal mobile trop proche d'une station de base d'un réseau d'accès, et ce sans compter sur le terminal mobile lui-même.

L'invention propose ainsi un procédé de contrôle d'accès d'au moins un terminal radio à des ressources d'un réseau de radiocommunication pour mettre en oeuvre un service de communication, le réseau de radiocommunication comprenant au moins une station de base. Le terminal radio est agencé pour émettre un premier signal d'accès puis, lorsqu'il reçoit un acquittement positif du premier signal d'accès depuis une station de base, un second signal d'accès sensiblement plus long que ledit premier signal d'accès, des ressources du réseau de communication étant allouées au terminal radio après réception dudit second signal d'accès à la station de base. Le procédé comprend les étapes suivantes :

/a/ recevoir à une station de base le premier signal d'accès émis par un terminal radio ;

/b/ détecter, à partir du premier signal d'accès, un service de communication sollicité par le terminal radio et certaines au moins des étapes suivantes, de façon conditionelle, selon le service de communication détecté :

/c/ mesurer une puissance de réception du premier signal d'accès ;

/d/ comparer la puissance de réception mesurée à un seuil ; et

/e/ inhiber la transmission d'un acquittement positif du premier signal d'accès au terminal radio, lorsque la puissance de réception mesurée est supérieure audit seuil.

Un tel procédé permet donc de limiter les tentatives d'accès des terminaux trop proches d'une station de base au simple envoi d'un signal de courte durée, par exemple le préambule d'un signal d'accès. Seuls les terminaux suffisamment éloignés de la station de base, et donc non susceptibles de générer des interférences nuisibles à d'autres communications, pourront poursuivre leur tentative d'accès et transmettant au réseau le second et principal signal d'accès. En effet, la puissance de réception du premier signal d'accès donne une indication pertinente de l'éloignement entre le terminal radio et la station de base considérés.

En outre, le traitement des signaux d'accès diffère en fonction du service de communication sollicité, de façon à ce que l'indication relative à la distance séparant le terminal radio et la station de base ne soit pas prise en compte pour certains types d'appels. En particulier, les appels d'urgence peuvent ne pas faire l'objet d'une mesure de discrimination en fonction de la distance.

La distinction entre les services de communication peut être faite en utilisant des partitions d'un canal d'accès aléatoire, qui peuvent être matérialisées par exemple par un sous-canal, c'est-à-dire une sélection temporelle du canal d'accès aléatoire et/ou une signature contenue dans le premier signal d'accès. La correspondance entre partitions du canal d'accès aléatoire et services de communication peut être avantageusement déduite d'informations diffusées par la station de base.

L'invention propose également une station de base d'un réseau de radiocommunication, comprenant des moyens pour recevoir et acquitter positivement un premier signal d'accès d'un terminal radio sollicitant un service de communication, et des moyens pour recevoir un second signal d'accès sensiblement plus long que ledit premier signal d'accès, des ressources du réseau de communication étant allouées au terminal radio après réception dudit second signal d'accès à la station de base. La station de base comprend en outre :

/a/ des moyens pour détecter, à partir d'un premier signal d'accès reçu d'un terminal radio, un service de communication sollicité par le terminal radio ;

/b/ des moyens pour mesurer une puissance de réception du premier signal d'accès ;

/c/ des moyens pour comparer la puissance de réception mesurée à un seuil ; et

/d/ des moyens pour inhiber la transmission d'un acquittement positif du premier signal d'accès au terminal radio, lorsque la puissance de réception mesurée est supérieure audit seuil.

Certains au moins des moyens /b/, /c/, /d/ sont mis en oeuvre, de façon conditionnelle, selon le service de communication détecté par les moyens /a/.

D'autres particularités et avantages de la présente invention apparaîtront dans la description ci-après d'exemples de réalisation non limitatifs, en référence aux dessins annexés, dans lesquels :

- la figure 1 représente deux terminaux mobiles reliés à une station de base d'un système de radiocommunication ;
- les figures 2 et 3 sont des schémas synoptiques partiels d'une station de base et d'un terminal mobile, respectivement ;
- la figure 4 est un schéma illustrant la structure de trame employée pour les canaux physiques RACH et AICH dans le système UMTS en mode FDD ("Frequency Division Duplex") ;
- la figure 5 est un organigramme schématisant les étapes mises en oeuvre dans un mode de réalisation de l'invention.

L'invention est décrite ici dans son application au réseau d'accès radio d'un système cellulaire de type UMTS. Ce réseau d'accès, appelé UTRAN (« UMTS Terrestrial Radio Access Network ») utilise la technique CDMA. Il comporte des contrôleurs de réseau radio 5 appelés RNC (« Radio Network Controller ») qui, par l'intermédiaire d'une interface *Iub*, pilotent des noeuds de réseau appelés « node B ». Chaque node B comporte une ou plusieurs stations de base 1 desservant chacune une ou plusieurs cellules. Ces stations de base communiquent par radio avec des terminaux mobiles 2, 3 appelés UE (« User Equipment ») par l'intermédiaire d'une interface *Uu* (voir spécification technique 3G TS 25.401, version 3.3.0).

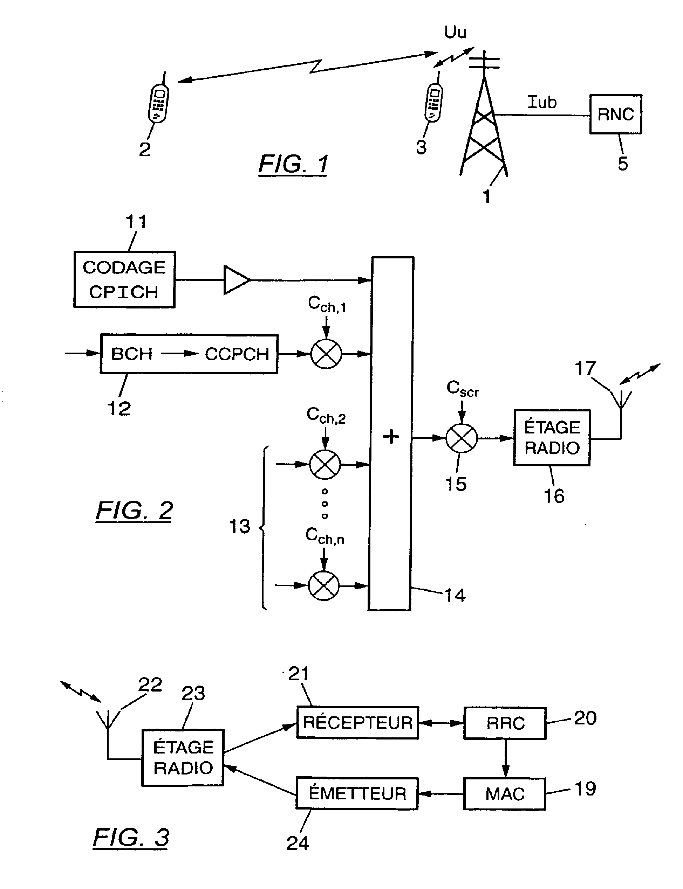

Les terminaux mobiles peuvent être relativement éloignés de la station de base, ou très proches comme le terminal mobile 3 montré sur la figure 1.

Chaque DE 2, 3 peut être dans plusieurs états de liaison avec l'UTRAN, gérés par un protocole de gestion des ressources radio (RRC, «Radio Resource Control») mis en oeuvre au niveau du RNC et au niveau de l'UE (voir spécification technique 3G TS 25.331, version 3.9.0, publiée en décembre 2001 par le 3GPP, section 9). Dans certains de ces états, l'UE est en connexion active avec le système de radiocommunication, c'est-à-dire notamment qu'il peut envoyer à destination de la station de base des signaux radio relatifs à une communication en cours. Dans ces états, les boucles d'asservissement de la puissance d'émission par l'UE sont opérationnelles.

Lorsque l'UE est sous tension et dans une cellule sélectionnée sans avoir de communication en cours avec l'UTRAN, il est dans un état de veille (« idle »). Les processus de sélection initiale et de resélection de cellule sont décrits dans la spécification technique 3G TS 25.304, version 3.6.0 publiée en mars 2001 par le 3GPP, section 5.2. Dans cet état de veille, après avoir sélectionné une cellule, l'UE reçoit des informations système émises sur un canal de diffusion (BCH) par la station de base de la cellule sélectionnée (voir spécification technique 3G TS 25.331, version 3.9.0, section 8.1.1).

Ces informations système incluent entre autres :

- la puissance d'émission (« Primary CPICH DL TX power », en dBm) par la station de base d'un signal de balise sur un canal pilote primaire appelé CPICH (« Common Pilot Channel ») (voir spécification technique 3G TS 25.331, version 3.9.0). L'UE est capable, en soustrayant la puissance de réception du CPICH (CPICH_RSCP) de cette puissance d'émission, d'estimer l'atténuation subie sur le canal de propagation ;
- deux paramètres appelés « UL interference » et « Constant Value » intervenant dans le calcul d'une puissance initiale d'émission par l'UE (voir spécification technique 3G TS 25.331, version 3.9.0).

La figure 2 montre schématiquement la partie émission de la station de base 1. Les données du CPICH (voir spécification technique 3G TS 25.211, version 3.3.0, publiée en juin 2000 par le 3GPP, section 5.3.3.1) sont produites par un module 11 et amplifiées conformément à la puissance d'émission « Primary CPICH DL TX power » spécifiée par le RNC. Le module 12 insère les informations de contrôle à diffuser sur le BCH dans le canal physique destiné à les recevoir, appelé P-CCPCH (« Primary Common Control Physical Channel », voir spécification technique 3G TS 25.211, version 3.3.0, section 5.3.3.2) et applique les codages correspondants. Ces informations de contrôle, reçues du RNC sur le canal de transport BCH, comprennent notamment les informations système précitées. En général, le CPICH a un code de « chanellisation » égal à 1, de sorte qu'il est directement ajouté aux contributions des autres canaux multipliées par leurs codes de « chanellisation » respectifs $c_{ch,1}$, $c_{ch,2}$, ..., $c_{ch,n}$. Parmi ces autres canaux, il y a les différents canaux dédiés 13 actifs dans la cellule.

Le signal sommé délivré par l'additionneur 14 est multiplié par le code de brouillage $c_{scr}$ (« scrambling code ») de la cellule, appliqué au multiplieur 15. La sortie de ce multiplieur 15 est reliée à l'étage radio 16 de la station, qui génère le signal radio émis par l'antenne 17.

Pour initialiser une communication, ou plus généralement pour transmettre des informations à l'UTRAN en mode veille, l'UE émet à destination de la station de base sélectionnée un signal de requête d'accès aléatoire sur un canal commun appelé PRACH («Physical Random Access Channel»).

Cette procédure d'accès aléatoire est exécutée par la couche physique (voir spécification technique 3G TS 25.214, version 5.4.0, section 6, sous le contrôle de la couche de contrôle d'accès au médium MAC (voir spécification technique 3G TS 25.321, version 3.4.0, publiée en juin 2000 par le 3GPP, section 11.2.2) et de la couche RRC. Les instances des protocoles MAC et RRC exécutées dans l'UE sont respectivement illustrées par les modules 19 et 20 sur la figure 3.

Le module 20 traite les informations système décodées sur le CCPCH par la partie réception 21 de l'UE à partir du signal radio capté par l'antenne 22 et traité par l'étage radio 23. Le récepteur 21 mesure en outre la puissance de réception sur le CPICH (paramètre CPICH_RSCP selon la spécification technique 3G TS 25.215, version 3.3.0, publiée en juin 2000 par le 3GPP, section 5.1.1), exprimée en dBm.

Préalablement à l'émission de la requête d'accès aléatoire, le module RRC 20 de l'UE estime une puissance d'émission $P_I$ de cette requête (« Preamble_Initial_Power »), sur la base de la dernière mesure de la puissance de réception CPICH_RSCP et de la puissance d'émission de la station de base sur le CPICH telle qu'indiquée dans les informations système diffusées. Cette estimation est effectuée comme indiqué dans la spécification technique 3G TS 25.331, version 3.9.0, section 8.5.7 :

$$P_I = \text{Preamble\_Initial\_Power}$$
$$= \text{Primary CPICH DL TX power} - \text{CPICH\_RSCP} + \text{UL interference} + \text{Constant Value}$$

La précision recommandée pour cette détermination est de $\pm 9$ dB à $\pm 12$ dB, (spécification technique 3G TS 25.101, version 3.6.0, page 12). Pour un UE 3 très proche de la station de base 1, cette valeur de puissance d'émission calculée $P_I$ peut être par exemple de l'ordre -70 dBm.

Compte tenu des caractéristiques de la partie radio 23 de l'UE, celui-ci ne peut émettre des signaux radio convenablement mis en forme qu'au-delà d'une puissance minimale déterminée $P_{min}$ (par exemple -50 dBm).

Quand $P_I < P_{min}$, la partie émission 24 de l'UE émet la requête d'accès aléatoire sur le canal PRACH avec la puissance $P_{min}$.

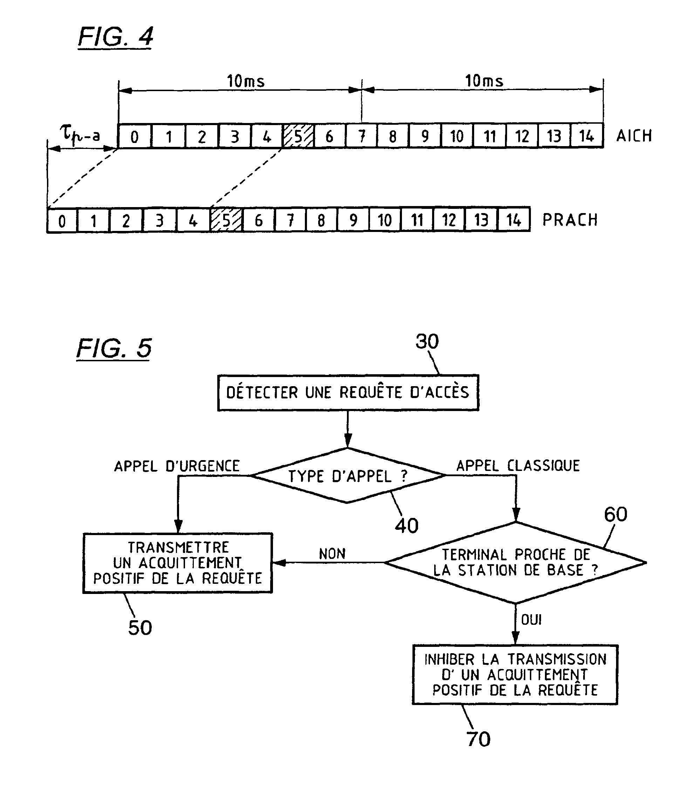

On décrit ci-après la procédure d'accès aléatoire de façon plus détaillée. La figure 4 donne une représentation schématique de la structure utilisée pour le canal PRACH. Celui-ci comprend un motif répété de deux ensembles de tranches d'accès ("access slots") : le premier comprenant les tranches d'accès numérotées de 0 à 7 et le second les tranches d'accès numérotées de 8 à 14. Les deux ensembles successifs de tranches d'accès ont une durée cumulée de 2 fois 10 ms, soit 20 ms.

Par ailleurs, des sous-canaux RACH sont définis parmi les 15 tranches d'accès du canal PRACH, à raison de 12 tranches d'accès. Le sous-canal RACH i , avec i entier compris entre 0 et 11, consiste en la tranche d'accès montant d'indice i correspondante, ainsi que toutes les 12èmes tranches d'accès suivant cette tranche, c'est-à-dire les tranches d'accès d'indice i + 12.k modulo 15, avec k entier (voir la spécification technique 3G TS 25.214, version 5.4.0, publiée par le 3GPP en mars 2003, section 6.1 ).

Une requête d'accès aléatoire est en fait composée de deux signaux distincts, qui peuvent être vus comme deux parties d'un même signal d'accès : un préambule et un message d'accès (partie principale du signal), ce dernier ayant une taille sensiblement supérieure au préambule et donc une durée d'émission plus élevée que celle du préambule (10ms ou 20ms). Le préambule comprend 256 répétitions d'un code appelé signature et noté $P_s(n)$, avec n entier compris entre 0 et 15. Les signatures $P_s(n)$ sont des codes d'Hadamard de 16 chips de longueur. La formulation de ces codes peut être trouvée à la section 4.3.3 de la spécification technique TS 25.213, version 3.7.0, publiée en décembre 2001 par le 3GPP.

Une requête d'accès aléatoire est donc effectuée en transmettant un signal correspondant au préambule sur un sous-canal i du canal PRACH (parmi les 12 sous-canaux possibles), noté sc(i), et en utilisant une signature $P_s(n)$ (parmi les 16 codes de signatures possibles). Ces paramètres d'accès peuvent faire l'objet d'un couple de paramètres caractéristique de l'accès aléatoire, parmi l'ensemble de couples possibles : (sc(i) ; $P_s(n)$), avec $0 \leq i \leq 11$ et $0 \leq n \leq 15$,

où i désigne un numéro de sous-canal RACH, et n un indice de signature de préambule. Un tel couple peut être considéré comme une partition parmi l'ensemble des partitions constituant le canal PRACH.

Par ailleurs, des classes d'accès au service ou ASC ("Access Service Class") sont définies dans le système UMTS. Chaque classe ASC correspond à un ensemble de partitions du canal PRACH, c'est-à-dire de couples (sc(i) ; $P_s$(n)) tels que définis plus haut, avec i compris entre une valeur minimale et une valeur maximale, dans la limite des bornes indiquées plus haut. Un recoupement est possible entre les partitions du PRACH et des classes ASC, si bien qu'un même couple (sc(i) ; $P_s$(n)) peut correspondre à plusieurs classes ASC distinctes. On considère par la suite qu'il existe au moins un ensemble d'au moins un couple (sc(i) ; $P_s$(n)), avec $i_{min,\theta} \leq i \leq i_{max,\theta}$ et $n_{min,\theta} \leq n \leq n_{max,\theta}$, tel que cet ensemble ne soit en correspondance qu'avec une seule classe d'accès au service, notée ASC($\theta$).

Toute procédure d'accès aléatoire sur la couche physique est initiée sur requête de la couche MAC. Elle ne peut être effectuée que si la couche physique a reçu de la couche RRM un ensemble de signatures disponibles ainsi que les sous-canaux RACH disponibles pour chaque classe ASC.

En outre, le système UMTS comporte des classes d'accès qui permettent de distinguer des types d'appels. Ces classes d'accès sont décrites en détail dans la spécification 3GPP TS 22.011, version V3.7.0 au paragraphe 4 (p. 11 et 12). Seize classes d'accès, numérotées de 0 à 15, sont définies dans le standard UMTS.

Les classes d'accès standard (AC), numérotées de 0 à 9, correspondent aux appels standard et sont allouées à tous les abonnés de manière à obtenir une distribution aléatoire uniforme. Chaque abonné se voit ainsi attribuer une classe d'accès standard, qui est consignée dans son module d'identification d'abonné, dit module SIM/USIM ("Universal Subscriber Identity Module"), qui peut éventuellement être une carte que l'on insère dans le terminal.

Outre cette classe d'accès standard, certains abonnés disposent d'une ou de plusieurs classes d'accès parmi les 5 classes d'accès numérotées de 11 à 15. La classe d'accès numéro 10 est, quant à elle, réservée aux appels d'urgence.

Il existe d'autre part une correspondance, propre à chaque cellule, entre les classes ASC et les classes d'accès AC (voir paragraphe 8.5.13 de la spécification 3GPP TS 25.331, version V3.9.0 publiée en décembre 2001 par le 3GPP). Dans le système UMTS, une seule classe ASC peut être mise en correspondance avec les classes d'accès standard, tandis que les autres classes d'accès AC peuvent être mises individuellement en correspondance avec une classe ASC.

On supposera dans la suite que la classe ASC($\theta$) est uniquement mise en correspondance avec une classe d'accès donnée. Dans un mode de réalisation avantageux, cette classe d'accès AC sera la classe d'accès 10, réservée aux appels d'urgence.

Comme indiqué plus haut, lorsque l'UE est en mode veille ("idle"), après avoir sélectionné une cellule, il reçoit des informations système émises sur le canal de diffusion BCH, par la station de base couvrant la cellule sélectionnée. Ces informations système comprennent, outre les paramètres évoqués plus haut, des informations de contrôle de l'accès montant, ainsi que des informations relatives à la procédure d'accès aléatoire sur la couche physique.

L'information de contrôle de l'accès montant comprend les classes d'accès AC pour lesquelles l'accès aléatoire est autorisé. Les informations relatives à la procédure d'accès aléatoire sur la couche physique identifient les tranches d'accès et les signatures qu'il est permis d'utiliser. Ces informations système incluent en outre la correspondance entre classes d'accès AC et classes ASC pour la cellule.

Par ailleurs, la procédure d'accès aléatoire sur la couche physique prévoit l'envoi par l'UTRAN d'un indicateur d'acquittement (« AI - Acquisition Indicator ») de la signature de préambule RACH, émise par un terminal mobile. Cet acquittement est transmis sur le canal physique commun descendant AICH (« Acquisition Indicator Channel »). Il présente une structure similaire à celle du préambule RACH, puisqu'il utilise un facteur d'étalement égal à 256 et une signature de séquence 16 chips. L'acquittement de l'accès aléatoire peut être positif ou négatif. Dans un exemple de réalisation, un acquittement sur le canal AICH utilisant une signature identique à la signature de préambule RACH est positif, tandis qu'un acquittement utilisant une signature inversée par rapport à la signature de préambule RACH est négatif.

Le canal AICH est, de même que les sous-canaux RACH, structuré selon un motif composé de 15 tranches temporelles successives, répété toutes les 20 ms, comme illustré sur la figure 4. Il est synchronisé sur un canal pilote primaire P-CPICH (« Primary Common Pilot Channel ») sur lequel chaque station de base du node-B concerné émet un signal de balise (voir spécification technique 3G TS 25.211 publiée par le 3GPP, version 3.9.0, section 7). Le canal P-CPICH sert en effet de référence en phase à d'autres canaux physiques, comme le canal AICH. Il est distingué par un code de « channelisation » unique normalisé (voir spécification technique 3G TS 25.213 publiée par le 3GPP, version 3.9.0, section 5.2).

La transmission descendante de l'acquittement ne peut être initiée qu'au début de la tranche d'accès AICH décalée de $\tau_{p-a}$ chips ($\tau_{p-a}$ étant un nombre déterminé en fonction de la longueur du message qui suit le préambule) par rapport au début de la tranche d'accès utilisée pour la transmission montante du préambule de l'accès aléatoire. Ce décalage est illustré sur la figure 4 : le préambule de l'accès aléatoire est émis dans la tranche d'accès numéro 5 de la trame courante du canal montant PRACH, tandis que l'acquittement est transmis dans la tranche d'accès de même numéro (5) dans la trame courante du canal descendant AICH. Les deux transmissions consécutives, indiquées par des hachures sur la figure 4, sont décalées dans le temps de $\tau_{p-a}$ chips.

Avant de faire un accès aléatoire vis-à-vis de la station de base 1, un UE 2, 3 prend en compte les informations système diffusées par le réseau. Cette prise en compte lui permet de déterminer et de mémoriser la correspondance entre classes d'accès AC et classes d'accès au service ASC propre à chaque cellule du réseau d'accès (voir spécification technique 3G TS 25.331 publiée par le 3GPP, version 3.9.0, sections 10.3.6.55 et 10.3.6.1). Le terminal mobile mémorise en particulier une correspondance entre la classe d'accès AC 10 réservée aux appels d'urgence et une classe ASC. Cette correspondance peut être mise à jour dans la mémoire du terminal si des modifications apparaissent dans les informations diffusées par le réseau.

L'UE sélectionne alors une classe ASC en fonction de la classe d'accès autorisée qu'il utilise pour l'appel. Lors d'un appel standard, la classe ASC ainsi sélectionnée sera celle qui correspond aux classes d'accès standard (classes d'accès AC de 0 à 9).

A la classe ASC(k) ainsi sélectionnée correspondra comme indiqué précédemment un ou plusieurs sous-ensemble autorisé de couples $\{(sc(i) ; P_s(n)) / i_{min,k} \leq i \leq i_{max,k}$ et $n_{min,k} \leq n \leq n_{max,k}\}$ de l'ensemble des ressources RACH. La tentative d'accès aléatoire par l'UE utilisera donc des ressources de cet ensemble.

A la réception de la requête d'accès, sur les ressources ainsi définies, la station de base 1 retrouve la classe d'accès AC utilisée pour le service à mettre en oeuvre, du fait des correspondances établies entre d'une part les ressources d'accès aléatoire et les classes ASC, et d'autre part les classes ASC et les classes d'accès, et sous réserve que certaines au moins des correspondances entre les éléments soient biunivoques.

Lors d'un appel d'urgence, la classe d'accès d'urgence sera utilisée et la classe ASC(θ) sera sélectionnée par l'UE 2, 3. L'accès aléatoire correspondant ne pourra être effectué qu'en utilisant les ressources du sous-ensemble θ de couples $\{(sc(i) ; P_s(n)) / i_{min,\theta} \leq i \leq i_{max,\theta}$ et $n_{min,\theta} \leq n \leq n_{max,\theta}\}$. La station de base 1 recevra la requête d'accès aléatoire et sera capable de reconnaître l'utilisation du sous-ensemble θ de couples de ressources, donc la sélection de la classe ASC(θ), et par conséquent, l'utilisation de la classe d'accès des appels d'urgence.

Dans un autre mode de réalisation, l'affectation des classes et la correspondance entre les ressources d'accès d'une part et les classes d'accès ainsi que les classes d'accès au service d'autre part, peuvent être faites de manière à ce que l'utilisation des ressources d'accès puisse permettre de définir de façon non équivoque d'autres types de services de communication que les appels d'urgence, par exemple des appels voix, des transmissions de données, etc.

Par ailleurs, lorsque la station de base 1 reçoit une requête d'accès aléatoire sur une partition du canal PRACH, elle est capable de calculer, de façon classique, la puissance de réception du signal reçu correspondant au préambule émis par un UE. Elle compare alors cette puissance d'émission à un seuil, éventuellement prédéterminé, pour déterminer si l'UE en question est trop proche ou non de la station de base. En effet, le signal d'accès émis par l'UE 3 proche de la station de base 1, aura une puissance de réception proche de la puissance d'émission $P_I$ de ce signal, telle qu'évoquée plus haut, puisque l'atténuation de signal sera faible sur le court chemin à parcourir par les ondes radio correspondantes. En revanche, un UE 2 plus éloigné de la station de base 1 verra la puissance d'émission $P_I$ du signal portant son préambule RACH fortement atténuée à la réception du signal par la station de base 1. Ainsi, un réglage adéquat du seuil de puissance permettra de dissocier avec plus ou moins de sévérité les terminaux mobiles considérés comme trop proches de la station de base.

Lorsque l'UE tentant d'accéder au réseau est considéré comme trop proche de la station de base (par exemple l'UE 2, vis-à-vis de la station de base 1), cette dernière inhibe alors la transmission d'un acquittement positif du préambule émis par l'UE sur le canal AICH. Cette inhibition peut consister en l'émission sur les ressources adéquates de l'AICH (telles que décrites plus haut) d'un acquittement négatif.

Une telle inhibition a pour effet de stopper la procédure d'accès aléatoire à ce stade. Le message d'accès constituant la seconde, et la plus importante, partie de la requête d'accès aléatoire ne sera alors pas émise par l'UE considéré, évitant ainsi de générer une interférence préjudiciable aux communications en cours, notamment avec ladite station de base. L'interférence est en effet limitée au bruit engendré par la transmission d'un préambule, qui peut être considérée comme faible en comparaison de celle que générerait la transmission du message d'accès de taille bien supérieure à celle du préambule.

Selon l'invention et comme illustré sur la figure 5, une station de base, après avoir détecté une requête d'accès (étape 30), détermine d'abord le service de communication que l'UE sollicite. Comme cela a été décrit précédemment, cette étape peut avantageusement consister à déterminer si la communication sollicitée est un appel classique ou un appel d'urgence (étape 40).

S'il s'agit d'un appel classique, on détermine si l'UE ayant émis le préambule d'accès aléatoire peut être considéré comme trop proche de la station de base (étape 60), par exemple en fonction du résultat d'une comparaison entre la puissance de réception du signal portant le préambule et un seuil, comme indiqué plus haut. Dans l'affirmative, la transmission d'un acquittement positif du préambule sera inhibée (étape 70) par exemple selon le mode de réalisation décrit plus haut, tandis que cette transmission aura lieu si l'UE n'est pas considéré comme trop proche de la station de base (étape 50).

Un tel choix n'est pas ouvert lorsque la station de base a détecté que la tentative d'accès concernait un appel d'urgence, par exemple selon le mode de réalisation décrit plus haut. Dans ce cas en effet, on ne cherchera pas à savoir si l'UE est proche de la station de base considérée, c'est-à-dire si la requête d'accès associée est susceptible de générer de l'interférence, de façon à ce que l'appel d'urgence puisse être établi dans tous les cas. Ainsi, un acquittement positif du préambule sera transmis à l'UE tentant l'accès, même si celui-ci est particulièrement proche de la station de base (étape 50). Un signal portant le message de requête d'accès suivant l'envoi du préambule sera alors transmis par l'UE à la station de base et la procédure d'accès sera menée à son terme, pour permettre l'établissement d'une liaison de communication apte à supporter l'appel d'urgence.

Dans une variante de réalisation, l'étape 60 d'estimation de la proximité de l'UE par rapport à la station de base est effectuée quel que soit le type d'appel à mettre en oeuvre. En revanche, l'exploitation de cette estimation pour inhiber éventuellement un acquittement de la requête d'accès, ne sera effectuée que si l'appel n'est pas un appel d'urgence.

Cela peut être réalisé par exemple en fixant des seuils différents suivant les partitions du canal PRACH. Ainsi, un seuil de puissance très élevé pourra être fixé pour la partition correspondant aux appels d'urgence, de manière à ce que la puissance de réception de la requête d'accès par la station de base soit toujours inférieure à ce seuil et donc que l'UE soit toujours considéré comme éloigné de la station de base. En revanche, un seuil plus bas pourra être utilisé sur les autres partitions du canal PRACH pour permettre le traitement distinctif des accès selon qu'ils sont effectués par des UE proches ou éloignés de la station de base.

## Revendications

1. Procédé de contrôle d'accès d'au moins un terminal radio (2, 3) à des ressources d'un réseau de radiocommunication pour mettre en oeuvre un service de communication, le réseau de radiocommunication comprenant au moins une station de base (1), le terminal radio étant agencé pour émettre un premier signal d'accès puis, lorsqu'il reçoit un acquittement positif du premier signal d'accès depuis une station de base, un second signal d'accès sensiblement plus long que ledit premier signal d'accès, des ressources du réseau de communication étant allouées au terminal radio après réception dudit second signal d'accès à la station de base, le procédé comprenant les étapes suivantes :

   /a/ recevoir à la station de base le premier signal d'accès émis par le terminal radio (30) ;
   /b/ détecter, à partir du premier signal d'accès, un service de communication sollicité par le terminal radio (40) ;
   et comprenant les étapes suivantes mises en oeuvre de façon conditionnelle, selon le service de communication détecté :
   /c/ mesurer une puissance de réception du premier signal d'accès (60) ;
   /d/ comparer la puissance de réception mesurée à un seuil (60) ; et
   /e/ inhiber la transmission d'un acquittement positif du premier signal d'accès au terminal radio, lorsque la puissance de réception mesurée est
   supérieure audit seuil (70).

2. Procédé selon la revendication 1, dans lequel le premier signal d'accès et le second signal d'accès sont respectivement un préambule et une partie principale d'un même signal d'accès.

3. Procédé selon la revendication 1 ou 2, dans lequel l'inhibition de la transmission d'un acquittement positif du premier signal d'accès consiste au moins en la transmission d'un acquittement négatif au terminal radio.

4. Procédé selon l'une quelconque des revendications précédentes, dans lequel les étapes /c/, /d/ et /e/ ne sont pas exécutées si le service de communication détecté est un appel d'urgence.

5. Procédé selon l'une quelconque des revendications précédentes, dans lequel le premier signal d'accès est émis par le terminal radio suivant une partition d'un canal d'accès aléatoire partitionné, ladite partition dépendant du service de communication sollicité, dans lequel chaque partition du canal d'accès aléatoire est **caractérisée par** un ensemble de paramètres d'accès respectif, tel qu'un sous-canal d'émission du canal d'accès aléatoire et une signature contenue dans le premier signal d'accès.

6. Procédé selon la revendication 5, dans lequel le premier signal d'accès est émis par le terminal radio suivant une partition du canal d'accès aléatoire, à partir d'une correspondance entre au moins les partitions du canal d'accès aléatoire et le service de communication solidité, ladite correspondance étant déduite d'informations diffusées par la station de base.

**7.** Procédé selon la revendication 5 ou 6, dans lequel le premier signal d'accès est émis par le terminal radio suivant une partition identifiée du canal d'accès aléatoire, lorsque le service de communication sollicité est un appel d'urgence.

**8.** Procédé selon l'une quelconque des revendications 5 à 7, dans lequel la détection du service de communication sollicité comprend une détection de la partition du canal d'accès aléatoire suivant laquelle le premier signal d'accès est émis par le terminal radio.

**9.** Procédé selon la revendication 8, dans lequel le seuil auquel la puissance de réception mesurée est comparée dépend de la partition détectée du canal d'accès aléatoire suivant laquelle le premier signal d'accès est émis par le terminal radio.

**10.** Station de base (1) d'un réseau de radiocommunication, comprenant des moyens pour recevoir et acquitter positivement un premier signal d'accès d'un terminal ratio (2, 3) sollicitant un service de communication et des moyens pour recevoir un second signal d'accès sensiblement plus long que ledit premier signal d'accès, des ressources du réseau de communication étant allouées au terminal radio après réception dudit second signal d'accès à la station de base, la station de base comprenant en outre :

/a/ des moyens pour détecter, à partir d'un premier signal d'accès reçu d'un terminal radio, un service de communication sollicité par le terminal radio ;
/b/ des moyens pour mesurer une puissance de réception du premier signal d'accès ;
/c/ des moyens pour comparer la puissance de réception mesurée à un seuil ; et
/d/ des moyens pour inhiber la transmission d'un acquittement positif du premier signal d'accès au terminal radio, lorsque la puissance de réception mesurée est supérieure audit seuil,

les moyens /b/, /c/, /d/ étant mis en oeuvre, de façon conditionnelle, selon le service de communication détecté par les moyens /a/.

**11.** Station de base selon la revendication 10, dans laquelle le premier signal d'accès et le second signal d'accès sont respectivement un préambule et une partie principale d'un même signal d'accès.

**12.** Station de base selon la revendication 10 ou 11, dans laquelle les moyens pour inhiber la transmission d'un acquittement positif du premier signal d'accès comprennent des moyens pour transmettre un acquittement négatif au terminal radio.

**13.** Station de base selon l'une quelconque des revendications 10 à 12, dans laquelle les moyens /b/, /c/, /d/ ne sont pas activés si le service de communication détecté est un appel d'urgence.

**14.** Station de base selon l'une quelconque des revendications 10 à 13, dans laquelle le premier signal d'accès est émis par le terminal radio suivant une partition d'un canal d'accès aléatoire partitionné, ladite partition dépendant du service de communication sollicité, dans laquelle chaque partition du canal d'accès aléatoire est **caractérisée par** un ensemble de paramètres d'accès respectif, tel qu'un sous-canal d'émission du canal d'accès aléatoire et une signature contenue dans le premier signal d'accès, et dans laquelle les moyens pour recevoir le premier signal d'accès comprennent des moyens pour détecter ladite partition du canal d'accès aléatoire partitionné suivant laquelle le premier signal d'accès est émis.

**15.** Station de base selon la revendication 14, comprenant des moyens de diffusion d'informations, dans laquelle le premier signal d'accès est émis par le terminal radio suivant une partition du canal d'accès aléatoire, à partir d'une correspondance entre au moins les partitions du canal d'accès aléatoire et le service de communication sollicité, ladite correspondance étant déduite des informations diffusées par la station de base.

**16.** Station de base selon la revendication 14 ou 15, dans laquelle le premier signal d'accès est émis par le terminal radio suivant une partition identifiée du canal d'accès aléatoire, lorsque le service de communication sollicité est un appel d'urgence,

**17.** Station de base selon l'une quelconque des revendications 14 à 16, dans laquelle les moyens pour détecter le service de communication sollicité comprennent des moyens pour détecter la partition du canal d'accès aléatoire suivant laquelle le premier signal d'accès est émis par le terminal radio.

**18.** Station de base selon la revendication 17, dans laquelle le seuil utilisé par les moyens pour comparer la puissance de réception mesurée à un seuil, dépend de la partition détectée par les moyens pour détecter la partition du canal d'accès aléatoire suivant laquelle le premier signal d'accès est émis par le terminal radio.

**Claims**

**1.** Method for controlling access of at least one radio terminal (2, 3) to radiocommunication network resources in order to implement a communication service, the radiocommunication network comprising at least one base station (1), with the radio terminal adapted to transmit a first access signal and then, upon receiving a positive acknowledgment of the first access signal from a base station, a second access signal appreciably longer than said first access signal, with resources of the communication network being allocated to the radio terminal after said second access signal is received at the base station, the method comprising the following steps:

/a/ receiving at the base station the first access signal transmitted by the radio terminal (30);
/b/ detecting, from the first access signal, a communication service requested by the radio terminal (40);

and comprising the following steps implemented conditionally, depending on the detected communication service:

/c/ measuring a reception power of the first access signal (60);
/d/ comparing the reception power measured with a threshold (60); and
/e/ inhibiting the transmission of a positive acknowledgement of the first access signal to the radio terminal, when the measured reception power is greater than said threshold (70).

**2.** Method according to claim 1, in which the first access signal and the second access signal are respectively a preamble and a main part of an access signal.

**3.** Method according to claim 1 or 2, in which the inhibition of the transmission of a positive acknowledgement of the first access signal consists at least in the transmission of a negative acknowledgement to the radio terminal.

**4.** Method according to any of the previous claims, in which steps /c/, /d/ and /e/ are not executed if the detected communication service is an emergency call.

**5.** Method according to any of the previous claims, in which the first access signal is transmitted by the radio terminal according to a partition of a partitioned random access channel said partition depending on the requested communication service, in which each partition of the random access channel is **characterised by** a respective set of access parameters, such as a transmission sub-channel of the random access channel and a signature contained in the first access signal.

**6.** Method according to claim 5, in which the first access signal is transmitted by the radio terminal according to a partition of the random access channel, from correspondence between at least the partitions of the random access channel and the communication service requested, said correspondence being deduced from information broadcast by the base station.

**7.** Method according to claim 5 or 6, in which the first access signal is transmitted by the radio terminal according to an identified partition of the random access channel, when the communication service requested is an emergency call.

**8.** Method according to any of claims 5 to 7, in which the detection of the communication service requested comprises detection of the partition of the random access channel according to which the first access signal is transmitted by the radio terminal.

**9.** Method according to claim 8, in which the threshold with which the measured reception power is compared depends on the detected partition of the random access channel according to which the first access signal is transmitted by the radio terminal.

**10.** Base station (1) of a radiocommunication network, comprising the means for receiving and positively acknowledging a first access signal of a radio terminal (2, 3) requesting a communication service and means for receiving a second access signal appreciably longer than said first access signal, resources of the communication network being allocated to the radio terminal after said second access signal is received at the base station, the base station further comprising:

/a/ means for detecting, from a first access signal received from a radio terminal, a communication service requested by the radio terminal;
/b/ means for measuring a reception power of the first access signal;
/c/ means for comparing the measured reception power with a threshold; and
/d/ means for inhibiting the transmission of a positive acknowledgement of the first access signal to the radio terminal, when the measured reception power is greater than said threshold,

the means /b/, /c/, /d/ being implemented conditionally, depending on the communication service deteded by means /a/.

11. Base station according to claim 10, in which the first access signal and the second access signal are respectively a preamble and a main part of an access signal.

12. Base station according to claim 10 or 11, in which the means for inhibiting the transmission of a positive acknowledgement of the first access signal comprise means for sending a negative acknowledgement to the radio terminal.

13. Base station according to any of claims 10 to 12, in which the means /b/, /c/, /d/ are not activated if the communication service detected is an emergency call.

14. Base station according to any of claims 10 to 13, in which the first access signal is transmitted by the radio terminal according to a partition of a partitioned random access channel, said partition depending on the communication service requested, in which each partition of the random access channel is **characterised by** a respective set of access parameters, such as a transmission sub-channel of the random access channel and a signature contained in the first access signal, and in which the means for receiving the first access signal comprise means for detecting said partition of the partitioned random access channel according to which the first access signal is transmitted.

15. Base station according to claim 14, comprising means for broadcasting information, in which the first access signal is transmitted by the radio terminal according to a partition of the random access channel, from correspondence between at least the partitions of the random access channel and the communication service requested, said correspondence being deduced from the information broadcast by the base station.

16. Base station according to claim 14 or 15, in which the first access signal is transmitted by the radio terminal according to an identified partition of the random access channel, when the communication service requested is an emergency call.

17. Base station according to any of claims 14 to 16, in which the means for detecting the communication service requested comprise means for detecting the partition of the random access channel according to which the first access signal is transmitted by the radio terminal,

18. Base station according to claim 17, in which the threshold used by the means for comparing the measured reception power with a threshold depends on the partition detected by the means for detecting the partition of the random access channel according to which the first acess signal is transmitted by the radio terminal.

**Patentansprüche**

1. Verfahren zur Zugangskontrolle mindestens eines Funkendgeräts (2, 3) zu Ressourcen eines Funkkommunikationsnetzwerks, welche für einen Kommunikationsdienst in Anspruch genommen werden, wobei das Funkkommunikationsnetzwerk mindestens eine Basisstation (1) umfasst, wobei das Funkendgerät dazu ausgelegt ist, ein erstes Zugangssignal auszusenden und anschließend, wenn es eine positive Quittierung des ersten Zugangssignals von einer Basisstation erhält, ein zweites Zugangssignal auszusenden, welches bedeutend länger als das besagte erste Zuganssssignal ist, wobei dem Funkendgerät nach dem Empfang des besagten zweiten Zugangssignals an der Basisstation Ressourcen des Kommunikationsnetzwerks zugeteilt werden, wobei das Verfahren die folgenden Schritte umfasst:

/a/ Empfangen, an der Basisstation, des vom Funkendgerät ausgesendeten ersten Zugangssignals (30);

/b/ Ermitteln, auf der Basis des ersten Zugangssignals, eines vom Funkendgerät angeforderten Kommunikationsdienstes (40);

/c/ Messen der Empfangsleistung des ersten Zugangssignals (60);

/d/ Vergleichen der gemessenen Empfangsleistung mit einem Grenzwert (60); und

/e/ Sperren der Übertragung einer positiven Quittierung des ersten Zugangssignals an das Funkendgerät, wenn die gemessene Emplangsleistung den besagten Grenzwert überschreitet (70).

2. Verfahren nach Anspruch 1, wobei das erste Zugangssignal eine Präambel und das zweite Zugangssignal ein Hauptabschnitt eines selben Zugangssignals sind.

3. Verfahren nach Anspruch 1 oder 2, wobei die Sperrung der Übertragung einer positiven Quittierung des ersten Zugangssignals zumindest in der Übertragung einer negativen Quittierung an das Funkendgerät besteht.

4. Verfahren nach einem beliebigen der vorstehenden Ansprüche, wobei die Schritte /c/, /d/ und /e/ nicht ausgeführt werden, wenn der ermittelte Kommunikationsdienst ein Notruf ist.

5. Verfahren nach einem beliebigen der vorstehenden Ansprüche, wobei das Funkendgerät das erste Zugangssignal gemäß einem Teilbereich eines unterteilten Zufall-Zugangskanals aussendet, wobei der besagte Teilbereich vom angeforderten Kommunikationsdienst abhängig ist, wobei jeder Teilbereich des Zufall-Zugangskanals durch eine Reihe von entsprechenden Zugangsparametern, zum Beispiel ein Übetragungs-Subkanal des Zufall-Zugangskanals und eine in dem ersten Zugangssignal enthaltene Signatur, **gekennzeichnet** ist.

6. Verfahren nach Anspruch 5, wobei das Funkendgerät das erste Zugangssignal gemäß einem Teilbereich des Zufall-Zugangssignals, auf der Basis einer Übereinstimmung zwischen zumindest den Teilbereichen des Zufall-Zugangskanals und dem angeforderten Kommunikatfonsdienst, aussendet, wobei die besagte Übereinstimmung von den von der Basisstation ausgestrahlten Informationen abgeleitet wird.

7. Verfahren nach Anspruch 5 oder 6, wobei das Funkendgerät das erste Zugangssignal gemäß einem identifizierten Teilbereich des Zufall-Zugangskanals aussendet, wenn der angeforderte Kommunikationsdienst ein Notruf ist.

8. Verfahren nach einem beliebigen der Ansprüche 5 bis 7, wobei das Ermitteln des angeförderten Kommunikationsdienstes ein Ermitteln des Teilbereichs des Zufall-Zugangskanals, gemäß welchem das erste Zugangssignal vom Funkendgerät ausgesendet wird, umfasst.

9. Verfahren nach Anspruch 8, wobei der Grenzwert, mit welchem die gemessene Empfangsleistung verglichen wird, von dem ermittelten Teilbereich des Zufall-Zugangskanals, gemäß welchem das erste Zugangssignal vom Funkendgerät ausgesendet wird, abhängig ist.

10. Basisstation (1) eines Funkkommunikationsnetzwerks, mit Mitteln zum Empfangen und zum positiven Quittieren eines ersten Zugangssignals eines Funkendgeräts (2, 3), welches einen Kommunikationsdienst anfordert, und mit Mitteln zum Empfangen eines zweiten Zugangssignals, welches bedeutend länger als das besagte erste Zugangssignal ist, wobei dem Funkendgerät nach dem Empfang des besagten zweiten Zugangssignals an der Basisstation Ressourcen des Kommunikatiönsnetzwerks zugeteilt werden, wobei die Basisstation weiterhin umfasst:

/a/ Mittel zum Ermitteln, auf der Basis des von einem Funkendgerät empfangenen ersten Zugangssignals, eines vom Funkendgerät angeforderten Kommunikationsdienstes;

/b/ Mittel zum Messen der Empfangsleistung des ersten Zugangssignals;

/c/ Mittel zum Vergleichen der gemessenen Empfangsleistung mit einem Grenzwert; und

/d/ Mittel zum Sperren der Übertragung einer positiven Quittierung des ersten Zugangssignals an das Funkendgerät, wenn die gemessene Empfangsleistung den besagten Grenzwert überschreitet,

wobei die Mittel /b/, /c/ und /d/ entsprechend dem von den Mitteln /a/ ermittelten Kommünikationsdienst bedingt eingesetzt werden.

11. Basisstation nach Anspruch 10, wobei das erste Zugangssignal eine Präambel und das zweite Zugangssignal ein Hauptabschnitt eines selben Zugangssignals sind.

**12.** Basisstation nach Anspruch 10 oder 11, wobei die Mittel zum Sperren der Übertragung einer positiven Quittierung des ersten Zugangssignals Mittel zum Übertragen einer negativen Quittierung an das Funkendgerät umfassen.

**13.** Basisstation nach einem beliebigen der Ansprüche 10 bis 12, wobei die Mittel /b/, /c/ und /d/ nicht aktiviert werden, wenn der ermittelte Kommunikationsdienst ein Notruf ist.

**14.** Basisstation nach einem beliebigen der Ansprüche 10 bis 13, wobei das Funkendgerät das erste Zugangssignal gemäß einem Teilbereich eines unterteilten Zufall-Zugangskanals aussendet, wobei der besagte Teilbereich vom angeforderten Kommunikationsdienst abhängig ist, wobei jeder Teilbereich des Zufall-Zugangskanals durch eine Reihe von entsprechenden Zusangsparametern, zum Beispiel ein Übertragungs-Subkanal des Zufall-Zugangskanals und eine in dem ersten Zugangssignal enthaltene Signatur, **gekennzeichnet** ist, und wobei die Mittel zum Empfangen des ersten Zugangssignals Mittel zum Ermitteln des besagten Teilbereichs des unterteilten Zufall-Zugangskanals, gemäß welchem das erste Zugangssignal ausgesendet wird, umfassen.

**15.** Basisstation nach Anspruch 14, mit Mitteln zum Ausstrahlen von Informationen, wobei das Funkendgerät das erste Zugangssignal gemäß einem Teilbereich des Zufall-Zugangssignals, auf der Basis einer Übereinstimmung zwischen zumindest den Teilbereichen des Zufall-Zugangskanals und dem angeforderten Kommunikationsdienst, aussendet, wobei die besagte Übereinstimmung von den von der Basisstation ausgestrahlten Informationen abgeteilt wird.

**16.** Basisstation nach Anspruch 14 oder 15, wobei das Funkendgerät das erste Zugangssignal gemäß einem identifizierten Teilbereich des Zufall-Zugangskanals aussendet, wenn der angeforderte Kommunikationsdienst ein Notruf ist.

**17.** Basisstation nach einem beliebigen der Ansprüche 14 bis 16, wobei die Mittel zum Ermitteln des angeforderten Kommunikationsdienstes Mittel zum Ermitteln des Teilbereichs des Zufall-Zugangskanals, gemäß welchem das erste Zugangssignal vom Funkendgerät ausgesendet wird, umfassen.

**18.** Basisstation nach Anspruch 17, wobei der Grenzwert, welcher von den Mitteln zum Vergleichen der gemessenen Empfangsleistung mit einem Grenzwert verwendet wird, von dem von den Mitteln zum Ermitteln des Teilbereichs des Zufall-Zugangskanals ermittelten Teilbereich, gemäß welchem das erste Zugangssignal vom Funkendgerät ausgesendet wird, abhängig ist.

*FIG. 1*

*FIG. 2*

*FIG. 3*

## FIG. 4

10ms | 10ms

$\tau_{p-a}$ | 0 | 1 | 2 | 3 | 4 | 5 | 6 | 7 | 8 | 9 | 10 | 11 | 12 | 13 | 14 | AICH

0 | 1 | 2 | 3 | 4 | 5 | 6 | 7 | 8 | 9 | 10 | 11 | 12 | 13 | 14 | PRACH

## FIG. 5

30

DÉTECTER UNE REQUÊTE D'ACCÈS

APPEL D'URGENCE ← TYPE D'APPEL ? → APPEL CLASSIQUE

40

TRANSMETTRE UN ACQUITTEMENT POSITIF DE LA REQUÊTE

50

NON ← TERMINAL PROCHE DE LA STATION DE BASE ?

60

OUI

INHIBER LA TRANSMISSION D'UN ACQUITTEMENT POSITIF DE LA REQUÊTE

70

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9965158 A
- WO 02098017 A
- EP 1119118 A